# EUROPÄISCHE PATENTANMELDUNG

(11) **EP 1 145 895 A2**
(43) Veröffentlichungstag der Anmeldung: **17.10.2001**
(21) Anmeldenummer: 01106623.0
(22) Anmeldetag: 16.03.2001
(51) Int. Cl.: B60K 28/10

(54) **Verfahren zur Verhinderung des in Bewegung setzens eines Kraftfahrzeugs**

(30) Priorität: 15.04.2000 DE 10018718
(71) Anmelder: Bayerische Motoren Werke Aktiengesellschaft, 80809 München (DE)
(72) Erfinder: Staebe, Jens, 81543 München (DE)

(57) **Zusammenfassung**

Die Erfindung betrifft ein Verfahren zur Verhinderung des in Bewegung setzens eines Kraftfahrzeugs bei Nicht-Erfüllung einer oder mehrerer vorgegebener Bedingungen. Bei Nicht-Erfüllung der vorgegebenen Bedingung bzw. Bedingungen wird die Drehzahl des Motors automatisch auf einen vorgegebenen Maximalwert beschränkt, bei dem das Kraftfahrzeug nicht in Bewegung gesetzt werden kann.

## Beschreibung

Die Erfindung betrifft ein Verfahren zu Verhinderung des in Bewegung setzens eines Kraftfahrzeugs bei Nichterfüllung einer oder mehrerer vorgegebener Bedingungen.

Die Erfindung bezieht sich auf Kraftahrzeuge, deren Inbetriebnahme an die Erfüllung bestimmter sicherheitsrelevanter Bedingungen oder Zustände gekoppelt werden soll. Solche Bedingungen sind z. B. das Einklappen bzw. Deaktivieren des Ständers bei einspurigen Fahrzeugen sowie das Anlegen des Sicherheitsgurtes oder die Funktionsfähigkeit des Bremssystems bei ein- oder mehrspurigen Fahrzeugen. Zur Zeit existieren am Markt Lösungen, die bei Personenkraftwagen das nicht erfolgte Anlegen des Sicherheitsgurtes optisch und/oder akustisch signalisieren, ohne jedoch den Betrieb des Fahrzeugs einzuschränken. Bei einspurigen Kraftfahrzeugen existieren zur Vermeidung des unbeabsichtigten Fahrens mit aktiviertem Ständer verschiedene Lösungen. Bei einer bekannten Lösung wird der Ständer vor Inbetriebnahme des Fahrzeugs selbsttätig deaktiviert, z. B. durch ein federbelastetes System, das bei der Herstellung der Fahrlage des Fahrzeugs selbsttätig wirksam wird, um den Ständer einzuklappen. Bei einer anderen bekannten Lösung wird der Motor selbsttätig abgeschaltet, wenn versucht wird, bei aktiviertem Ständer einen Gang einzulegen. Es sind auch Maßnahmen bekannt, die das Starten des Motors bei aktiviertem Ständer generell verhindern.

Diese bekannten Lösungen sind aber unbefriedigend, weil sie im praktischen Gebrauch entweder zu unsicher oder unkomfortabel sind. Bei optischen und/oder akustischen Warneinrichtungen kann das Fahrzeug ohne weiteres in Bewegung gesetzt werden, auch wenn der Sicherheitsgurt nicht angelegt ist. Das selbsttätige Abschalten des Motors bei dem Versuch mit aktiviertem Ständer einen Gang einzulegen, ist nur bei einem Schaltgetriebe anwendbar. Wenn das Starten des Motors bei aktiviertem Ständer generell nicht möglich ist, dann werden Wartungsarbeiten erheblich erschwert, die üblicherweise bei laufendem Motor am stillstehenden Fahrzeug durchgeführt werden.

Der Erfindung liegt die Aufgabe zugrunde, ein Verfahren anzugeben, das ein in Bewegung setzen des Kraftfahrzeugs bei Nichterfüllung bestimmter, insbesondere sicherheitsrelevanter Zustände des Fahrzeugs mit Sicherheit verhindert, aber einen Betrieb des Motors im Leerlauf ermöglicht.

Erfindungsgemäß wird diese Aufgabe dadurch gelöst, daß bei Nicht-Erfüllung der vorgegebenen Bedingung bzw. Bedingungen die Drehzahl des Motors automatisch auf einen vorgegebenen Maximalwert beschränkt wird, bei dem das Kraftfahrzeug nicht in Bewegung gesetzt werden kann.

Die Erfüllung der vorgegebenen Bedingung bzw. der Bedingungen kann mit Sensoren ermittelt werden, die mit der Motorsteuerung gekuppelt sind.

Die Begrenzung der Drehzahl des Motors auf einen vorgegebenen Maximalwert erfolgt vorzugsweise über einen Regelkreis.

Wenn die Erfindung bei einem mit einem Automatikgetriebe ausgerüsteten Kraftfahrzeug angewendet wird, dann ist vorgesehen, daß die Maximaldrehzahl des Motors bei Nicht-Erfüllung der vorgegebenen Bedingung bzw. Bedingungen kleiner ist als die Anfahrdrehzahl des Automatikgetriebes.

Das erfindungsgemäße Verfahren erbringt einen Sicherheitsgewinn, weil das Kraftfahrzeug in kritischen Zuständen nicht in Bewegung gesetzt werden kann. Bestimmte sicherheitsrelevante Bedingungen (Gurt angelegt?, Ständer eingeklappt?) werden automatisch von Sensoren abgefragt, und bei Nichterfüllung dieser Bedingung oder Bedingungen wird die Drehzahl des Motors auf einen Wert unterhalb der Anfahrdrehzahl begrenzt. Damit wird das beabsichtigte oder unbeabsichtigte in Bewegung setzen eines Kraftfahrzeugs bei Nichterfüllung einer oder mehrerer sicherheitsrelevanter Bedingungen zuverlässig verhindert.

Die Erfindung bedeutet aber auch einen Komfortgewinn, weil der Motor bei stehendem Fahrzeug gestartet und mit Leerlaufdrehzahl arbeiten kann, auch wenn die für den Fahrbetrieb vorgegebenen Bedingungen nicht erfüllt sind. Der Motor kann daher auch dann gestartet werden, wenn beispielsweise der Gurt noch nicht angelegt bzw. der Ständer noch nicht eingeklappt wurde. Andererseits kann der Motor im Leerlauf weiterlaufen, wenn sich der Fahrer bei stillstehendem Fahrzeug kurzzeitig abschnallt bzw. das Fahrzeug kurzzeitig auf dem Ständer abstellt. Ein erneutes Starten des Motors zur Weiterfahrt wird damit überflüssig. Dies ist für die Ladebilanz der Batterie sehr vorteilhaft, weil die Betätigung des Anlassers mit einem hohen Stromverbrauch verbunden ist. Durch die Erfindung werden auch Diagnose- und Wartungsarbeiten erheblich erleichtert, weil sie bei laufendem Motor am stillstehenden Fahrzeug durchgeführt werden können, das auf dem Ständer abgestellt ist oder dessen Fahrer nicht angeschnallt ist.

Das erfindungsgemäße Verfahren ist insbesondere, aber nicht ausschließlich für ein mit einem Automatikgetriebe ausgerüstetes einspuriges Kraftfahrzeug vorgesehen, das mit einer Fahrgastzelle und mit einem Vier-Punkt Sicherheitsgurtsystem ausgerüstet ist. Bei einem derartigen Kraftfahrzeug besteht für den Fahrer keine Pflicht zum Tragen eines Schutzhelms, er muß aber angeschnallt sein, damit die Fahrgastzelle ihre Sicherheitsfunktion erfüllen kann. Bei einem solchen einspurigen Kraftfahrzeug ist die Maximaldrehzahl des Motors erfindungsgemäß auf einen unter der Anfahrdrehzahl des verwendeten Automatikgetriebes liegenden Wert begrenzt, wenn der Ständer nicht hochgeklappt ist und/oder wenn der Fahrer sich nicht angeschnallt hat.

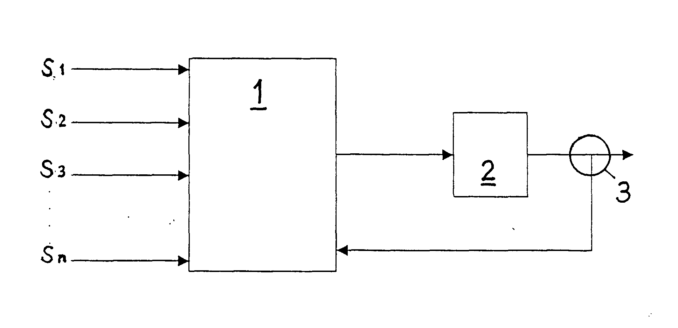

Die Erfindung wird nachfolgend anhand eines in der Zeichnung dargestellten Ausführungsbeispiels näher erläutert.

In der einzigen Figur der Zeichnung ist der Steuerkreis zur Steuerung der Drehzahl eines Motors für ein Kraftfahrzeug schematisch dargestellt.

Eine Motorsteuerung 1 liefert eine Stellgröße an einen Motor 2, vorzugsweise einen Verbrennungsmotor, um diesen mit einer Soll-Drehzahl zu betreiben. Ein Drehzahlmeßgerät 3 ermittelt die Ist-Drehzahl des Motors 2 und liefert ein entsprechendes Signal an die Motorsteuerung 1. Falls die Ist-Drehzahl des Motors 2 von der Soll-Drehzahl abweicht, wird die von der Motorsteuerung 1 an den Motor 2 gelieferte Stellgröße in der erforderlichen Weise geändert. Die Motorsteuerung 1 ist mit mehreren Sensoren S₁, S₂, S₃ ..... Sₙ verbunden, die bestimmte Bedingungen oder Zustände des zugehörigen Kraftfahrzeugs ermitteln, die für die Sicherheit des Fahrers bedeutsam sind. Von den Sensoren kann beispielsweise abgefragt werden, ob der Ständer des Kraftfahrzeugs eingeklappt ist, falls es sich um ein einspuriges Kraftfahrzeug handelt, ob der Fahrer den Sicherheitsgurt angelegt hat, ob das Bremssystem funktionsfähig ist oder ob der Ölstand bzw. der Öldruck ausreichend ist oder dergleichen. Falls alle zu prüfenden sicherheitsrelevanten Bedingungen erfüllt sind, kann die Motorsteuerung 1 vom Fahrer beliebig betätigt werden, d. h. der Motor 2 kann gestartet werden, und das Kraftfahrzeug kann in Bewegung gesetzt werden. Falls einer der Sensoren S₁, S₂, S₃ ..... Sₙ jedoch ein Fehlersignal an die Motorsteuerung 1 abgibt, das anzeigt, daß eine der vorgegebenen Bedienungen nicht erfüllt ist, dann kann der Motor 2 zwar gestartet werden, seine Drehzahl wir aber von der Motorsteuerung 1 auf einen vorgegebenen Maximalwert begrenzt. Dieser Maximalwert ist so gewählt, daß er bei einem Kraftfahrzeug mit Automatikgetriebe unter der Anfahrdrehzahl des Getriebes liegt oder bei einem Kraftfahrzeug mit Schaltgetriebe jedenfalls ausreichend niedrig ist, um ein in Bewegung setzen des Kraftfahrzeugs zu verhindern.

Wenn eine der vorgegebenen Bedingungen nicht erfüllt ist, dann ist gewährleistet, daß das Kraftfahrzeug nicht in Bewegung gesetzt werden kann. Der Motor kann aber gleichwohl gestartet werden und im Leerlauf arbeiten. Dies ermöglicht die Durchführung bestimmter Wartungs- oder Diagnosearbeiten bei laufendem Motor, ohne daß der Fahrer den Ständer des Kraftfahrzeugs hochklappen und sich anschnallen muß.

## Patentansprüche

1. Verfahren zur Verhinderung des in Bewegung setzens eines Kraftfahrzeugs bei Nicht-Erfüllung einer oder mehrerer vorgegebener Bedingungen, **dadurch gekennzeichnet, daß** bei Nicht-Erfüllung der vorgegebenen Bedingung bzw. Bedingungen die Drehzahl des Motors automatisch auf einen vorgegebenen Maximalwert beschränkt wird, bei dem das Fahrzeug nicht in Bewegung gesetzt werden kann.

2. Verfahren nach Anspruch 1, **dadurch gekennzeichnet, daß** die Erfüllung der Bedingung bzw. der Bedingungen mit Sensoren ermittelt wird, die mit der Motorsteuerung gekuppelt sind.

3. Verfahren nach Anspruch 1 oder 2, **dadurch gekennzeichnet, daß** die Drehzahl des Motors über einen Regelkreis begrenzt wird.

4. Verfahren nach einem der Ansprüche 1 bis 3, **dadurch gekennzeichnet, daß** die Maximaldrehzahl kleiner ist als die Anfahrdrehzahl eines Automatikgetriebes.
